# EUROPÄISCHE PATENTANMELDUNG

(11) **EP 3 967 631 A1**
(43) Veröffentlichungstag der Anmeldung: **16.03.2022**
(21) Anmeldenummer: 21195885.5
(22) Anmeldetag: 10.09.2021
(51) Int. Cl.: B65G 27/02, B65G 27/18, B65G 47/14

(54) **SCHWINGFÖRDERER MIT EINEM DREHANGETRIEBENEN ANTRIEBSMAGNETEN**

(30) Priorität: 14.09.2020 DE 102020123907
(71) Anmelder: Escha GmbH & Co. KG, 58553 Halver (DE)
(72) Erfinder: MUNTEAN, Daniel, 51688 Wipperfürth (DE)
(74) Vertreter: Grundmann, Dirk

(57) **Zusammenfassung**

Die Erfindung betrifft einen Schwingförderer mit einem Gestell (1) und einem daran schwingfähig gekoppelten Rüttelelement (2), das mittels zumindest einem in einem zeitlich veränderbaren Magnetfeld angeordneten Abtriebsmagneten (6) in eine Schwingung versetzbar ist. kann vorgesehen sein, dass mehrere Antriebsmagneten (8) zu mehreren Abtriebsmagneten (6) korrespondieren und auf einer Drehscheibe angeordnet sind.

## Beschreibung

### Gebiet der Technik

Die Erfindung betrifft einen Schwingförderer mit einem Gestell und einem daran schwingfähig gekoppelten Rüttelelement, dass mittels zumindest einem in einem zeitlich veränderbaren Magnetfeld angeordneten Abtriebsmagneten in eine Schwingung versetzbar ist, wobei der Abtriebsmagnet am Rüttelelement befestigt ist, dass üblicherweise mit ein oder mehreren Federelementen an einem Gestell befestigt ist, und bei dem eine am Gestell befestigte Einrichtung vorgesehen ist, mit der ein sich änderndes Magnetfeld, insbesondere oszillierendes Magnetfeld erzeugt wird.

### Stand der Technik

Bei einer Vorrichtung dieser Art, die in der DE 20 2008 006 747 U1 beschrieben wird, wird das sich ändernde Magnetfeld von einem Elektromagneten erzeugt. Der Abtriebsmagnet ist ein Anker, der durch Induktion des vom Elektromagneten erzeugten Magnetfeldes zum Abtriebsmagneten wird. Der dort beschriebene Schwingantrieb wird mit einer anzutreibenden Schwingfördereinrichtung, wie einer Förderinne oder dergleichen, gekoppelt. Dabei stellt sich ein Zwei-Massen-Resonanz-System ein, welches in Resonanznähe betrieben wird. Die Eigenfrequenz des Schwingsystems, bestehend aus Schwingantrieb und Schwingfördereinrichtung, muss so eingestellt werden, dass die Eigenfrequenz in der Nähe der Resonanzfrequenz des Schwingsystems liegt, jedoch von dieser verschieden ist. Mit einer derartigen Fördereinrichtung werden Kleinteile gefördert und ausgerichtet, sodass sie beispielsweise von einem Greifer gegriffen werden können, um weiterverarbeitet werden zu können.

Die AT 255 965 beschreibt eine Förderrichtung zur Förderung von Kleinteilen, die einen Rütteltopf aufweist. Der Rütteltopf ist in einer schwingfähigen Weise mit einem Gestell gekoppelt, sodass der Rütteltopf eine oszillierende Schwingung durchführen kann. Der Rütteltopf wird dabei derart angetrieben, dass sich die in einer am Rand eines Behälters des Rütteltopfes angeordneten Kleinteile schrittweise entlang einer schraubenförmigen Führungsbahn, die sich vom Boden des Behälters zum Rand hin hochwindet, gefördert werden und sich dabei orientieren.

Eine Förderinne, die mit einem Permanentmagneten/Schwingspulenantrieb in Schwingung versetzt wird, wird in der DE 10 2009 015 208 B3 beschrieben.

### Zusammenfassung der Erfindung

Der Erfindung liegt die Aufgabe zugrunde, einen gattungsgemäßen Schwingförderer, insbesondere einen Schwingförderer mit Rütteltopf, gebrauchsvorteilhaft weiterzubilden.

Gelöst wird die Aufgabe durch die in den Ansprüchen angegebene Erfindung, wobei die Unteransprüche nicht nur vorteilhafte Weiterbildungen der im Hauptanspruch angegebenen Erfindung, sondern auch eigenständige Lösungen der Aufgabe darstellen und in beliebiger Form miteinander kombinierbar sind.

Zunächst im Wesentlichen wird vorgeschlagen, dass das Magnetfeld, welches das Rüttelelement derart in eine Schwingung versetzt, dass durch die Schwingung Kleinteile gefördert werden, von zumindest einem sich auf einer Kreisbahn bewegenden Antriebsmagneten erzeugt wird. Es können ein oder mehrere Abtriebsmagnete vorgesehen sein. Die Abtriebsmagnete können einem von einem Drehantrieb um eine Drehachse drehantreibbaren Drehkörper zugeordnet sein. Der Drehkörper kann eine Drehscheibe sein, die eine Drehachse aufweist, die bevorzugt koaxial zu einer Schwingachse verläuft, um die das Rüttelelement eine oszillierende Schwingung durchführt. Es können mehrere, insbesondere in einer gleichmäßigen Winkelverteilung um die Drehachse angeordnete Antriebsmagneten vorgesehen sein. Die Antriebsmagneten sind bevorzugt Permanentmagneten. Der Antriebsmotor kann ein Elektromotor sein. Die Drehachse des Elektromotors kann in der Drehachse des Drehkörpers verlaufen. Bevorzugt sind vier, sechs oder acht Magneten in einem gleichmäßigen Radialabstand um die Drehachse des Drehkörpers angeordnet. Die Magnete können eine gemeinsame Polrichtung aufweisen. Die Magnete können aber auch wechselweise in Gegenrichtung gepolt sein. Die Polachse verläuft bevorzugt parallel zur Drehachse. Sie kann aber auch quer zur Drehachse verlaufen. Der Antriebsmotor kann fest am Gestell befestigt sein. Es kann eine Zentriereinheit vorgesehen sein, mit der der Antriebsmotor am Gestell befestigt ist.

Das Rüttelelement ist bevorzugt ein Rütteltopf, wie er in der AT 255 965 beschrieben ist. Er bildet einen Behälter aus, der einen Behälterboden aufweist, der von einem Behälterrand umgeben ist. Im Bereich des Behälterrandes verläuft eine Führungsbahn, die sich schraubenförmig vom Boden bis zum Rand des Behälters hochwindet. Das Rüttelelement ist mit Federelementen, die Blattfedern sein können, mit dem Gestell derart verbunden, dass das Rüttelelement gegenüber dem Gestell eine Schwingung ausführen kann. Bevorzugt ist es eine um eine Schwingachse oszillierende Schwingung. Das Gestell kann einen ringförmigen Träger aufweisen, an dem mehrere, insbesondere zwei, drei oder vier Blattfedern mit einem Ende befestigt sind. Ein anderes Ende der Blattfedern ist mit dem Bodenbereich des Rüttelelementes befestigt. Dort kann das Rüttelelement eine Bodenplatte aufweisen, die Befestigungsflächen aufweist, an denen die Federelemente befestigt sind. Die Blattfedern können schräg gegenüber einer Schwingebene des Rüttelelementes verlaufen.

Das Rüttelelement ist Träger zumindest eines Abtriebsmagneten. Es können mehrere Abtriebsmagneten vorgesehen sein. Die Anzahl der Abtriebsmagneten kann der Anzahl der Antriebsmagneten entsprechen. Die Abtriebsmagneten können in einer kreisförmigen Anordnung um die Schwingachse angeordnet sein. Die Abtriebsmagneten können eine gemeinsame Polrichtung aufweisen. Die Polrichtung kann aber auch verschieden sein. Die Polachsen können parallel zur Schwingachse ausgerichtet sein. Sie können aber auch quer zur Schwingachse ausgerichtet sein. Die Abtriebsmagneten können auch wechselweise in Gegenrichtung gepolt sein. Bevorzugt sind die Abtriebsmagneten in einer Bodenplatte des Rüttelelementes angeordnet. Die Bodenplatte verläuft bevorzugt parallel zum Drehkörper beziehungsweise einer Drehscheibe, die die Abtriebsmagneten trägt. Sind jeweils mehrere Magnete vorgesehen, so liegen die Abtriebsmagneten in einer ersten Ebene senkrecht zur Drehachse und liegen die Antriebsmagneten bevorzugt in einer zweiten Ebene ebenfalls senkrecht zur Drehachse. Die zueinander parallelen Ebenen sind geringfügig voneinander beabstandet.

Durch Drehen des Elektromotors werden die ein oder mehreren Antriebsmagneten in einer Kreisbahn um die Drehachse des Drehkörpers gedreht und erzeugen so ein sich zeitlich änderndes Magnetfeld, in dem die ein oder mehreren Abtriebsmagneten angeordnet sind. Das derart rotierende Magnetfeld generiert Schwingungen, durch welche in an sich bekannter Weise die im Behälter des Rüttelelementes angeordneten Kleinteile schrittweise gefördert werden. Durch eine Änderung der Drehzahl des Antriebsmotors lässt sich das Förderverhalten präzise einstellen. Ein weiterer Parameter zur Beeinflussung der Fördercharakteristik des Schwingförderers besteht in der Anordnung und Ausrichtung der Magneten. Durch die Wahl der Polachsen oder Anordnung der Polachsen lässt sich das Förderverhalten beeinflussen. Die Magnete können gegenpolig oder gleichpolig angeordnet werden. Es kann vorgesehen sein, dass die die Antriebsmagneten ausbildenden Permanentmagneten austauschbar in Halterungen des Drehkörpers stecken, sodass Ihre Polung umgestellt werden kann. Auch die Anzahl der vom Drehkörper getragenen Magneten können zur Beeinflussung der Fördercharakteristik geändert werden. Hierdurch lässt sich eine feindosierbare Schwingung erzeugen, die sich durch die Anordnung und Ausrichtung der Magneten sowie durch die Wahl der Drehzahl des Antriebs präzise einstellen lässt.

### Kurze Beschreibung der Zeichnungen

Ein Ausführungsbeispiel der Erfindung wird nachfolgend anhand beigefügter Zeichnungen erläutert. Es zeigen:

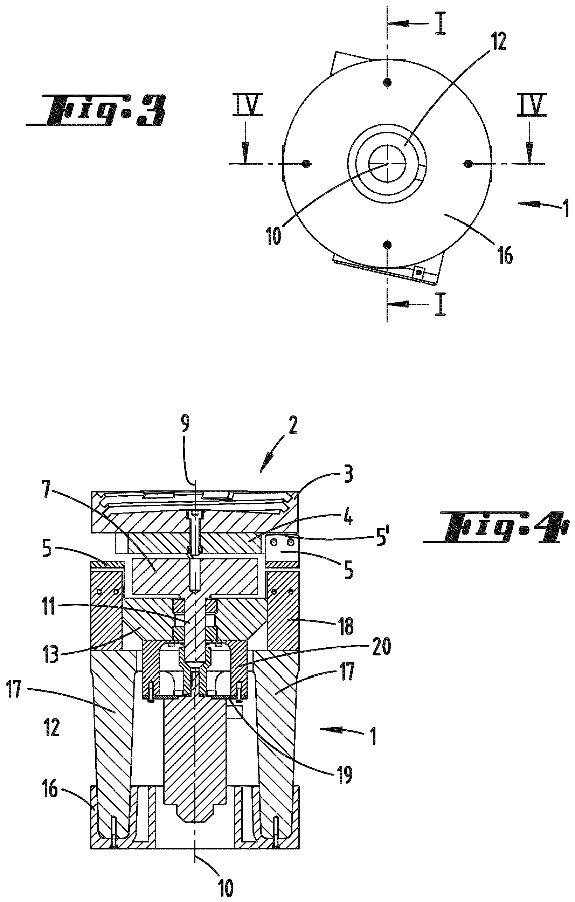

- Fig. 1: einen Schnitt gemäß der Schnittlinie I-I in Figur 3 eines Ausführungsbeispiels,
- Fig. 2: eine Ansicht des Ausführungsbeispiels,
- Fig. 3: eine Draufsicht des Ausführungsbeispiels,
- Fig. 4: einen Schnitt gemäß der Linie IV-IV in Figur 3,

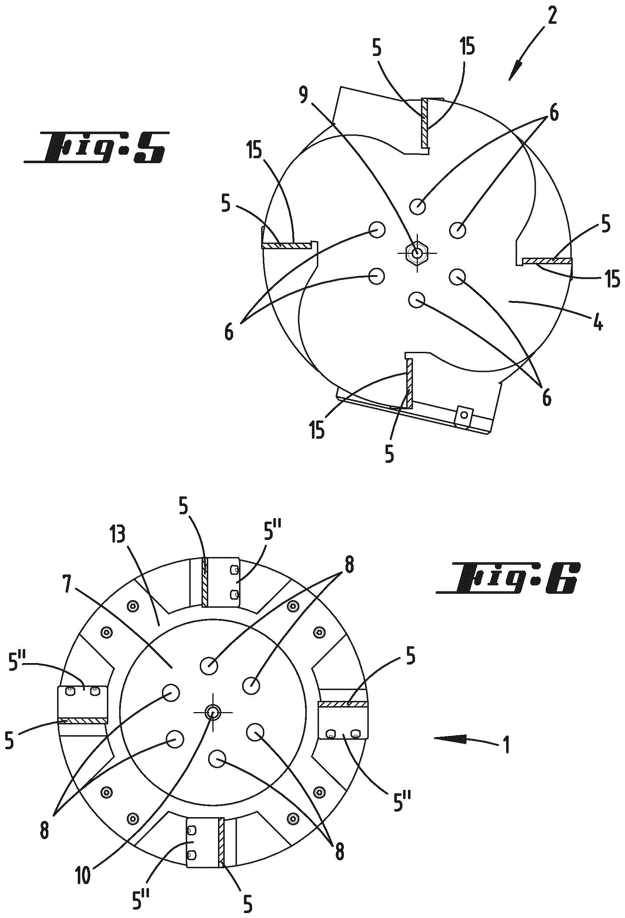

- Fig. 5: einen Schnitt gemäß der Linie V-V in Figur 2 mit Blick auf die Abtriebsmagneten 6,
- Fig. 6: einen Schnitt gemäß der Linie VI-VI in Figur 2 mit Blick auf die Antriebsmagneten 8,

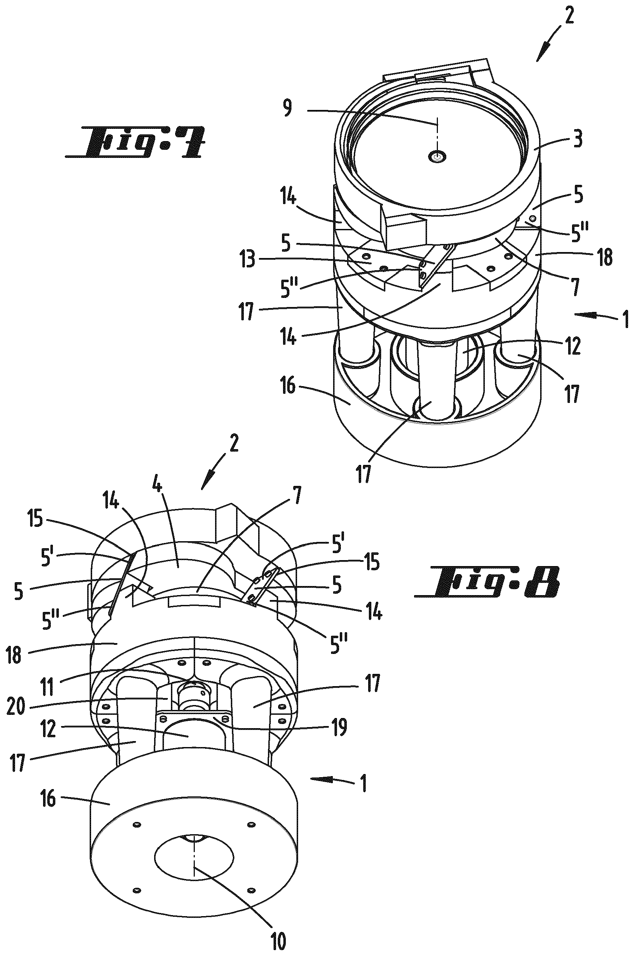

- Fig. 7: eine erste perspektivische Darstellung und
- Fig. 8: eine zweite perspektivische Darstellung.

### Beschreibung der Ausführungsformen

Die in den Zeichnungen dargestellte Fördereinrichtung ist ein Schwingförderer mit einem Rüttelelement 2, das in schwingfähiger Weise mit einem Gestell 1 verbunden ist. Hierzu ist das beim Ausführungsbeispiel als Rütteltopf 2 ausgebildete Rüttelelement mit vier in gleichmäßiger Umfangsverteilung angeordneten Blattfedern 5 mit dem Gestell 1 und insbesondere mit einem ringförmigen Träger 18 des Gestells verbunden.

Bezogen auf eine Schwingebene des Rüttelelementes 2 sind die Blattfedern 5 schräg ausgerichtet. Ein erstes Ende 5' jeder Blattfeder 5 ist mit einer schräg verlaufenden Befestigungsfläche 15 mit dem Bodenbereich des Rütteltopfes verbunden. Die Befestigungsfläche 15 wird von einer Bodenplatte 4 ausgebildet, die einen Behälter 3 trägt.

In der Bodenplatte 4 sind sechs Permanentmagneten angeordnet. Die Permanentmagneten bilden Abtriebsmagneten 6, die in nicht dargestellten Halterungen angeordnet sein können, sodass sie austauschbar und/oder umkehrbar sind. Die Polrichtung der Abtriebsmagneten 6 kann somit geändert beziehungsweise eingestellt werden. Die Abtriebsmagneten 6 sind mit einem einheitlichen Radialabstand zu einer Schwingachse 9 angeordnet, die gleichzeitig die Figurenachse des im Wesentlichen symmetrischen Behälters 3 ist.

Das Gestell 1 weist einen Fuß 16 auf, der eine ringförmige Gestalt aufweisen kann und mit dem das Gestell 1 auf einem Untergrund aufgestellt werden kann. Vom Fuß 16 ragen mehrere Säulen 17 ab, die den Träger 18 tragen. Am Träger 18 ist eine Zentriereinheit 13 befestigt. Die Zentriereinheit 13 befindet sich in einer Ringöffnung des ringförmigen Trägers 18. Die Zentriereinheit 13 trägt und zentriert eine Antriebseinheit. Die Antriebseinheit weist einen Antriebsmotor 12 auf, der mit einer Flanschplatte 19 und einem Halteelement 20 an der Zentriereinheit 13 derart befestigt ist, dass die Drehachse 10 koaxial zur Schwingachse 9 verläuft.

Die Antriebswelle 11 des Elektromotors 12, die sich beim Ausführungsbeispiel in der Drehachse 10 erstreckt, treibt einen Drehkörper 7 an, der als Kreisscheibe ausgebildet ist. Die derart gestaltete Drehscheibe 7 trägt eine Mehrzahl von Permanentmagneten, die Antriebsmagneten 8 ausbilden. Die Antriebsmagnete 8 können in nicht dargestellten Halterungen angeordnet sein, sodass sie ausgetauscht und/oder umgekehrt werden können.

Während die Abtriebsmagneten 6 in einer zur Drehscheibe 7 weisenden Breitseitenfläche des Bodenbereichs 4 angeordnet sein können, können die Antriebsmagneten 8 in einer zum Bodenbereich 4 weisenden Breitseitenfläche der Drehscheibe 7 angeordnet sein. Um eine maximale magnetische Kopplung zwischen den Antriebsmagneten 8 und den Abtriebsmagneten 6 zu erreichen, sind die beiden Breitseitenflächen beziehungsweise die Antriebsmagneten 8 und die Abtriebsmagneten 6 nur geringfügig voneinander beabstandet. Beim Ausführungsbeispiel erstreckt sich zwischen der Breitseitenfläche des Bodenbereiches 4 und der Breitseitenfläche der Drehscheibe 7 nur ein schmaler Luftspalt.

Der Drehkörper 7 kann materialeinheitlich einen Schaft ausbilden, der eine Antriebswelle ausbildet, die in einem Kugellager gelagert ist.

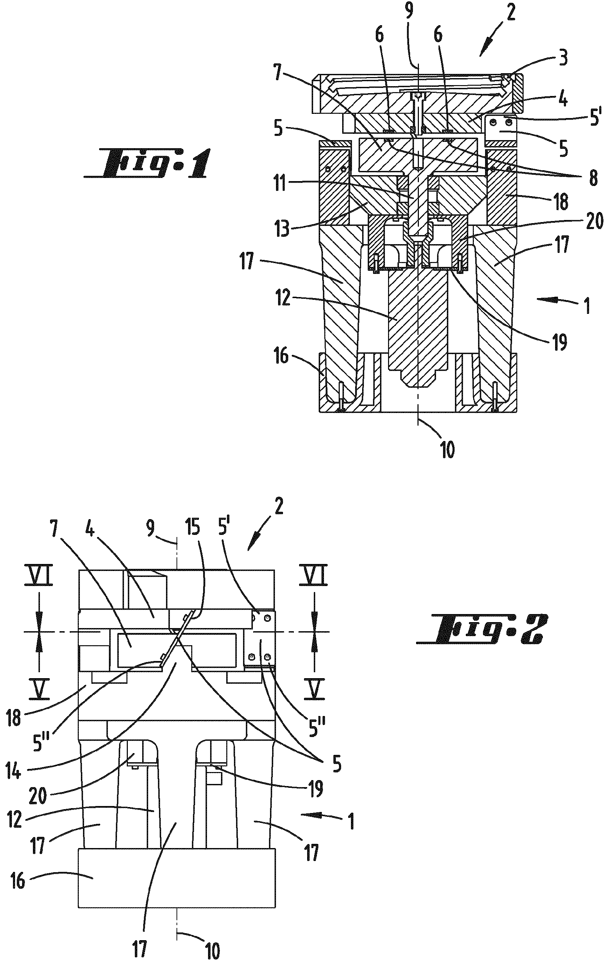

Die Funktionsweise der Vorrichtung ist die Folgende: Der Behälter 3 nimmt Kleinteile auf. Er wird von einem sich zeitlich verändernden Magnetfeld in eine oszillierende Schwingung gebracht, wobei die Schwingung so durchgeführt wird, dass sich die Kleinteile entlang einer Führungsbahn im Bereich des Randes des Behälters 3 schrittweise von unten nach oben verlagern. Das zeitlich sich verändernde Magnetfeld wird von der mittels des Elektromotors 12 in eine Drehung verbrachten Drehscheibe 7 und die dabei die Drehachse 10 umkreisenden Antriebsmagneten 8 erzeugt. Die dabei erzeugten magnetischen Felder üben eine anziehende und abstoßende Kraft auf die Abtriebsmagneten 6 aus. Die Kraft hat eine azimutale Kraftkomponente, die periodisch wechselt und sich insbesondere umkehrt. Als Folge dieser sich zeitlich ändernden Kraft wird der Rütteltopf 2 in eine Schwingung versetzt, deren zeitlicher Verlauf unter anderem in der Figur 2 der DE 20 2008 006 747 U1 schematisch dargestellt ist.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können, nämlich:

Ein Schwingförderer, der dadurch gekennzeichnet ist, dass das veränderbare Magnetfeld von mindestens einem auf einer Kreisbahn laufenden Antriebsmagneten 8 erzeugt wird.

Ein Schwingförderer, der dadurch gekennzeichnet ist, dass das den mindestens einen Abtriebsmagneten 6 aufweisende Rüttelelement 2 mit ein oder mehreren Federelement 5 mit dem Gestell verbunden ist und/oder dass der Abtriebsmagnet 6 einen Permanentmagnet ist.

Ein Schwingförderer, der dadurch gekennzeichnet ist, dass das Rüttelelement 2 ein um eine Schwingachse 9 gegen die Rückstellkraft des Federelementes 5 schwingbarer Rütteltopf ist.

Ein Schwingförderer, der dadurch gekennzeichnet ist, dass der zumindest eine Antriebsmagnet 8 an einem um eine im Wesentlichen in der Schwingachse 9 verlaufende Drehachse 10 drehangetriebenen Drehkörper 7 befestigt ist.

Ein Schwingförderer, der dadurch gekennzeichnet ist, dass der zumindest eine Antriebsmagnet 8 denselben Radialabstand zur Schwingachse 9 aufweist wie der Abtriebsmagnet 6.

Ein Schwingförderer, der dadurch gekennzeichnet ist, dass der Drehkörper 7 eine Drehscheibe ist und/oder von einem Antriebsmotor 12, insbesondere Elektromotor, drehantreibbar ist.

Ein Schwingförderer, der dadurch gekennzeichnet ist, dass mehrere Abtriebsmagneten 6 mit demselben Radialabstand zur Schwingachse 9 in einem Bodenbereich 4 und insbesondere einer Bodenplatte des Rütteltopfes 2 in einer gleichmäßigen Umfangsverteilung angeordnet sind und/oder dass mehrere Antriebsmagneten 8 mit demselben Radialabstand zur Drehachse 10 in einer gleichmäßigen Umfangsverteilung angeordnet sind.

Ein Schwingförderer, der gekennzeichnet ist durch eine den Antriebsmotor 12 lagernde Zentriereinheit 13, mit der der Antriebsmotor 12 am Gestell 1 befestigt ist, wobei insbesondere vorgesehen ist, dass die Achse des Antriebsmotors 12 koaxial zur Schwingachse 9 verläuft.

Ein Schwingförderer, der dadurch gekennzeichnet ist, dass die Federelemente 5 Blattfedern sind, die ein am Rütteltopf 2 oder einer Bodenplatte 4 des Rütteltopfs 2 befestigtes erstes Ende 5' und ein am Gestell 1 oder einem ringförmigen Träger 18 des Gestells 1 befestigtes zweites Ende 5" aufweisen und/oder dass der Rütteltopf 2 mit den ein oder mehreren Federelementen 5 am Gestell 1 befestigt ist.

Ein Schwingförderer, der dadurch gekennzeichnet ist, dass die ein oder mehreren Antriebsmagneten 8 in derselben Richtung oder in der Gegenrichtung der ein oder mehreren Abtriebsmagneten 6 gepolt sind und/oder dass die in einer Umfangsrichtung hintereinander angeordneten Antriebsmagneten 8 oder Abtriebsmagneten 6 gleich gepolt oder abwechselnd gegensinnig gepolt sind und/oder dass die Polachse des mindestens einen Antriebsmagneten 8 und/oder Abtriebsmagneten 6 parallel oder quer zur Schwingachse 9 verläuft.

Alle offenbarten Merkmale sind (für sich, aber auch in Kombination untereinander) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren, auch ohne die Merkmale eines in Bezug genommenen Anspruchs, mit ihren Merkmalen eigenständige erfinderische Weiterbildungen des Standes der Technik, insbesondere um auf Basis dieser Ansprüche Teilanmeldungen vorzunehmen. Die in jedem Anspruch angegebene Erfindung kann zusätzlich ein oder mehrere der in der vorstehenden Beschreibung, insbesondere mit Bezugsziffern versehene und/oder in der Bezugsziffernliste angegebene Merkmale aufweisen. Die Erfindung betrifft auch Gestaltungsformen, bei denen einzelne der in der vorstehenden Beschreibung genannten Merkmale nicht verwirklicht sind, insbesondere soweit sie erkennbar für den jeweiligen Verwendungszweck entbehrlich sind oder durch andere technisch gleichwirkende Mittel ersetzt werden können.

### Liste der Bezugszeichen

- 1: Gestell
- 2: Rüttelelement, Rütteltopf
- 3: Behälter
- 4: Bodenbereich des Rütteltopfs, Bodenplatte
- 5: Federelement, Blattfeder
- 5': erstes Ende
- 5": zweites Ende
- 6: Abtriebsmagnet
- 7: Drehkörper, Drehscheibe
- 8: Antriebsmagnet
- 9: Schwingachse
- 10: Drehachse
- 11: Antriebswelle
- 12: Antriebsmotor
- 13: Zentriereinheit
- 14: Böckchen
- 15: Befestigungsfläche
- 16: Fuß
- 17: Säule
- 18: Träger
- 19: Flanschplatte
- 20: Halteelement

## Patentansprüche

1. Schwingförderer mit einem Gestell (1) und einem daran schwingfähig gekoppelten Rüttelelement (2), das mittels zumindest einem in einem zeitlich veränderbaren Magnetfeld angeordneten Abtriebsmagneten (6) in eine Schwingung versetzbar ist, **dadurch gekennzeichnet, dass** das veränderbare Magnetfeld von mindestens einem auf einer Kreisbahn laufenden Antriebsmagneten (8) erzeugt wird.

2. Schwingförderer nach Anspruch 1, **dadurch gekennzeichnet, dass** das den mindestens einen Abtriebsmagneten (6) aufweisende Rüttelelement (2) mit ein oder mehreren Federelement (5) mit dem Gestell verbunden ist und/oder dass der Abtriebsmagnet (6) einen Permanentmagnet ist.

3. Schwingförderer nach einem der vorhergehenden Ansprüche, **dadurch gekennzeichnet, dass** das Rüttelelement (2) ein um eine Schwingachse (9) gegen die Rückstellkraft des Federelementes (5) schwingbarer Rütteltopf ist.

4. Schwingförderer nach einem der vorhergehenden Ansprüche, **dadurch gekennzeichnet, dass** der zumindest eine Antriebsmagnet (8) an einem um eine im Wesentlichen in der Schwingachse (9) verlaufende Drehachse (10) drehangetriebenen Drehkörper (7) befestigt ist.

5. Schwingförderer nach einem der vorhergehenden Ansprüche, **dadurch gekennzeichnet, dass** der zumindest eine Antriebsmagnet (8) denselben Radialabstand zur Schwingachse (9) aufweist wie der Abtriebsmagnet (6).

6. Schwingförderer nach einem der vorhergehenden Ansprüche, **dadurch gekennzeichnet, dass** der Drehkörper (7) eine Drehscheibe ist und/oder von einem Antriebsmotor (12), insbesondere Elektromotor, drehantreibbar ist.

7. Schwingförderer nach einem der vorhergehenden Ansprüche, **dadurch gekennzeichnet, dass** mehrere Abtriebsmagneten (6) mit demselben Radialabstand zur Schwingachse (9) in einem Bodenbereich (4) und insbesondere einer Bodenplatte des Rütteltopfes (2) in einer gleichmäßigen Umfangsverteilung angeordnet sind.

8. Schwingförderer nach einem der vorhergehenden Ansprüche, **dadurch gekennzeichnet, dass** mehrere Antriebsmagneten (8) mit demselben Radialabstand zur Drehachse (10) in einer gleichmäßigen Umfangsverteilung angeordnet sind.

9. Schwingförderer nach einem der vorhergehenden Ansprüche, **gekennzeichnet durch** eine den Antriebsmotor (12) lagernde Zentriereinheit (13), mit der der Antriebsmotor (12) am Gestell (1) befestigt ist, wobei insbesondere vorgesehen ist, dass die Achse des Antriebsmotors (12) koaxial zur Schwingachse (9) verläuft.

10. Schwingförderer nach einem der vorhergehenden Ansprüche, **dadurch gekennzeichnet, dass** die Federelemente (5) Blattfedern sind, die ein am Rütteltopf (2) oder einer Bodenplatte (4) des Rütteltopfs (2) befestigtes erstes Ende (5') und ein am Gestell (1) oder einem ringförmigen Träger (18) des Gestells (1) befestigtes zweites Ende (5") aufweisen.

11. Schwingförderer nach einem der vorhergehenden Ansprüche, **dadurch gekennzeichnet, dass** der Rütteltopf (2) mit den ein oder mehreren Federelementen (5) am Gestell (1) befestigt ist.

12. Schwingförderer nach einem der vorhergehenden Ansprüche, **dadurch gekennzeichnet, dass** die ein oder mehreren Antriebsmagneten (8) in derselben Richtung oder in der Gegenrichtung der ein oder mehreren Abtriebsmagneten (6) gepolt sind.

13. Schwingförderer nach einem der vorhergehenden Ansprüche, **dadurch gekennzeichnet, dass** die in einer Umfangsrichtung hintereinander angeordneten Antriebsmagneten (8) oder Abtriebsmagneten (6) gleich gepolt oder abwechselnd gegensinnig gepolt sind.

14. Schwingförderer nach einem der vorhergehenden Ansprüche, **dadurch gekennzeichnet, dass** die Polachse des mindestens einen Antriebsmagneten (8) und/oder Abtriebsmagneten (6) parallel oder quer zur Schwingachse (9) verläuft.

15. Schwingförderer, **gekennzeichnet durch** eines oder mehrere der kennzeichnenden Merkmale eines der vorhergehenden Ansprüche.
